Europäisches Patentamt

European Patent Office

Office européen des brevets

(19)

(11) Veröffentlichungsnummer: **0 161 622**
A2

# (12) EUROPÄISCHE PATENTANMELDUNG

(21) Anmeldenummer: 85105575.6

(22) Anmeldetag: 07.05.85

(51) Int. Cl.⁴: **F 16 B 35/00,** F 16 B 7/14

(30) Priorität: 15.05.84 DE 8414846 U

(43) Veröffentlichungstag der Anmeldung: 21.11.85
Patentblatt 85/47

(84) Benannte Vertragsstaaten: BE DE FR GB IT LU NL

(71) Anmelder: SPRINGFIX-Befestigungstechnik GmbH,
Brühlstr. 38, D-7335 Salach (DE)

(72) Erfinder: Spitznagel, Franz, Dipl.-Ing., Kiesgasse 18,
D-8702 Greusenheim (DE)

(74) Vertreter: Bardehle, Heinz, Dipl.-Ing. et al, Patent- und
Rechtsanwälte Bardehle-Pagenberg-Dost-Altenburg &
Partner Postfach 86 06 20, D-8000 München 86 (DE)

(54) Verbindungselement.

(57) Verbindungselement, bei welchem außenseitig an einer
geschlitzten Gewindehülse mindestens ein verschiebbarer
Ring angeordnet ist.

EP 0 161 622 A2

ACTORUM AG

1

Springfix Befestigungstechnik     München den   6. 5. 1985/st
GmbH                              S 5503 -EP
Brühlstr. 38
7335 Salach

B e s c h r e i b u n g

---

Verbindungselement

---

Die Neuerung betrifft ein Verbindungselement.

Aus der DE-OS 32 02 433 ist ein Befestigungselement zum Verbinden von zwei Bauteilen, insbesondere von Türschloßhebel und Befestigungsstange zum Türgriffhebel von Kraftfahrzeugen bekannt. Durch diese Befestigungsmittel werden zwei Bauteile, wobei zumindest das eine Bauteil stangenförmig ausgebildet ist, und die sich in einem Toleranzabstand zu dem anderen Teil befinden, miteinander verbunden. Hierbei wird das stangenförmige Teil, das an seinem Ende ein Gewinde aufweist, auf der einen Hälfte seines Gewindeumfangs durch ein starres Befestigungsteil und auf der anderen Hälfte seines Umfangs durch ein mit dem ersten Befestigungsteil über ein hakenförmiges Rastelement verbindbares Befestigungsteil umschlossen, so daß das Gewinde fixiert ist. Durch diese klammerartige Fixierung des Gewindes kann das starre Befestigungsteil an jeder beliebigen Stelle des Gewindes angebracht werden. An dem starren Befestigungsteil ist ferner eine Rastvorrichtung vorgesehen, an die ein benachbartes Bauteil angeschlossen werden kann. Nachteil dieses Befestigungsmittel ist es, daß es eine relativ aufwendige Formgebung benötigt und insbesondere, daß der Kraftangriffspunkt des benachbarten Bauteils nicht in der Achse der Stange liegt, wodurch Hebelkräfte auftreten.

Aus der DE-PS 28 48 955 ist ferner eine aus Kunststoff bestehende Verbindungsmuffe bekannt, die zwei koaxial zueinanderliegende Stangenteile schalenartig umschließt und diese dabei miteinander verbindet. Für den nötigen Kraft- und Formschluß beider Stangenteile in Axialrichtung sorgt eine Querrillung am Innenumfang der Verbindungsmuffe, die zu einer entsprechenden Rillung am Außenumfang der zu verbindenden Stangenteile korrespondiert.

Diese Verbindungsmuffe besitzt einen Schlitz, der unter Berücksichtigung der Elastizität des Kunststoff-Werkstoffes der Verbindungsmuffe so groß gestaltet ist, daß er einerseits noch eine ausreichende Umschließung der Stange und andererseits eine Elastizität beim Einklipsen der Stangenenden ergibt. Als nachteilig stellt sich bei dieser Verbindungsmuffe heraus, daß die Verschließlasche des Schlitzes infolge derselben Elastizität ab einer gewissen Belastung sich öffnet, so daß nur geringe Kräfte übertragen werden können. Wenn auf eines der beiden Stangenteile Querkräfte aufgetragen werden, so springt dieser Verschluß leicht auf und führt somit zu einer Lösung der Verbindung.

Aufgabe der vorliegenden Neuerung ist es, ein Verbindungselement zu schaffen, das unter Vermeidung der Nachteile der bekannten Befestigungsmittel leicht herzustellen ist, eine sichere Verbindung ermöglicht, und krafttechnisch günstig konzipiert ist.

Diese Aufgabe wird bei einem Verbindungselement gem. dem Oberbegriff des Anspruchs 1 durch den kennzeichnenden Teil des Anspruchs 1 gelöst.

Das Verbindungselement gem. der vorliegenden Neuerung ist leicht und trotzdem sicher an einer Gewindestange einer radial, axial und kreuzweise gerändelte Stange oder dergleichen oder einem Gewindeteil eines anderen stangenartigen Bauteils zu befestigen.

Die Gewindestange oder das Gewindeteil eines stangenartigen Bauteils kann in die geschlitzte Gewindehülse einfach eingeschoben oder von oben eingeklipst werden. Hierdurch wird ohne Drehung die gewünschte Längsposition erzielt. Durch das Schieben mindestens eines Ringes über die geschlitzte Hülse wird die Gewindestange oder das Gewindeteil eines anderen stangenartigen Bauteils mit der geschlitzten Hülse, die innenseitig glatt ist oder vorzugsweise eine Oberflächenstruktur wie die von zu befestigende Stange aufweist, kraft- und formschlüssig verbunden.

Der Ring kann innen einen glatten oder gewindeartigen geriffelten Rücken aufweisen, der eine zusätzliche Fixierung der Gewindestange oder des Gewindeteils eines anderen stangenartigen Bauteils mit der geschlitzten Hülse und dem Ring bewerkstelligt. Ferner kann am Ende dieses Rückens eine Nase vorgesehen sein, die eine Längsfixierung der Gewindestange oder des Gewindeteils eines anderen stangenartigen Bauteils bewirkt.

An einem Ende der geschlitzten Hülse kann ein Befestigungselement, beispielsweise eine Kugelpfanne, ein Ring zum Einhaken eines weiteren Teils, ein Gelenkzapfen eine Kugel oder dergleichen vorgesehen sein. Anstelle dieses Befestigungselements kann auch die geschlitzte Hülse in einer affinen Verdoppelung ausgestaltet sein. In diesem Fall könnte sie ähnlich wie die Verbindungsmuffe entsprechend der DE-PS 28 48 955 zwei stangenartige Teile aufnehmen. An der geschlitzten Hülse, vorzugsweise im mittleren Bereich können noch weitere Verbindungselemente wie ein Gewindebolzen, ein Zapfen, eine Kugel, ein Befestigungsklip, ein Ring für einen Haken oder dergleichen vorgesehen seien. Dies hat den Vorteil, daß das Befestigungselement an einer beliebigen Stelle einer Stange fixiert werden kann und, vorzugsweise rechtwinklig zur Hülse die Verbindung zu einem weiteren Teil möglich ist. Dies erbringt den Vorteil, daß über ein derartiges Verbindungselement ein weiteres Teil entweder parallel zur Achse der geschlitzten Hülse oder radial

4

zu der Verbindungsstelle bewegt werden kann, ohne daß die Verbindungspositionierung aufgegeben wird.

Weitere Vorteile, Merkmale und Anwendungsmöglichkeiten der vorliegenden Neuerung ergeben sich aus dem Ausführungsbeispiel in Verbindung mit der Zeichnung. Hierin zeigt

Fig. 1 eine teilweise geschnittene Seitenansicht einer längsverstellbaren Kugelpfanne,

Fig. 2 einen Schnitt durch die längs verstellbare Kugelpfanne entsprechend Fig. 1 in der Position A-A,

Fig. 3 eine Stirnansicht der längsverstellbaren Kugelpfanne,

Fig. 4 eine Stirnansicht eines Rings,

Fig. 5 einen Längsschnitt durch einen Ring gem. Fig. 4,

Fig. 6 eine perspektivische Darstellung des Verbindungselements in einer anderen Ausführungsform.

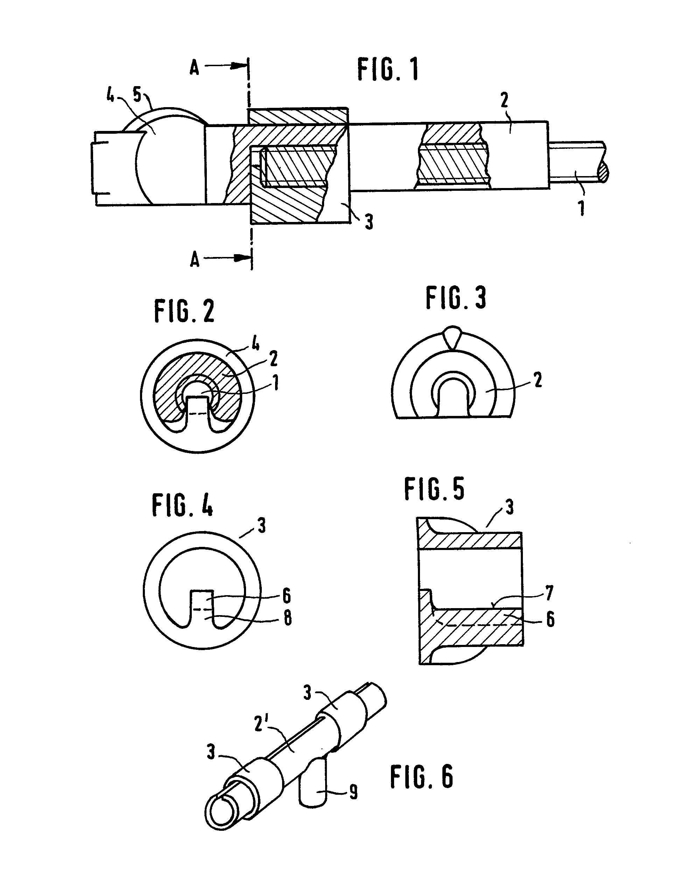

In den Fig. 1 bis 6 ist eine bevorzugte Ausführungsform der Neuerung dargestellt, wobei als Befestigungselement eine Kugelpfanne dient. Es liegt auf der Hand, daß anstelle der Kugelpfanne auch ein Ring für einen Haken, ein Zapfen, eine Kugel oder dergleichen vorgesehen sein kann.

In Fig. 1 ist eine teilweise geschnittene Seitenansicht einer längsverstellbaren Kugelpfanne dargestellt. Dieses Bauteil dient zur Verbindung einer Gewindestange 1 oder eines Gewindeteils eines anderen stangenartigen Bauteils mit einem zweiten, hier nicht dargestellten Bauteil über ein nicht dargestelltes Kugelgelenk. Die Gewindestange 1 wird hierbei von einer geschlitzten Hülse 2 teilweise umschlossen. Über der Hülse 2 ist ein Ring 3 gestülpt. Die Hülse 2 ist vorzugsweise nicht über ihre gesamte Länge geschlitzt. An ihrem nicht geschlitzten Ende schließt sich eine Kugelpfanne 4 an.

Fig. 2 zeigt einen Querschnitt durch eine längsverstellbare Kugelpfanne an der Stelle A-A. Deutlich ist hierbei die Gewindestange 1, die geschlitzte Hülse 2 und der Ring 3 zu erkennen.

In der dargestellten Ausführungsform besitzt der Schlitz der Hülse 2 eine abgerundete Öffnung. Neben dieser abgerundeten Öffnung hat sich eine Schlitzöffnung als vorteilhaft erwiesen, die eine längs des Schlitzes verlaufende Fase aufweist. Die Fase besitzt hierbei einen Winkel, der abgestimmt ist mit der Elastizität des Materials der Hülse 2. Hierdurch wird ein optimal leichtes Einklippen der Gewindestange ermöglicht.

In Fig. 3 ist eine Stirnansicht, gesehen aus Richtung der Gewindestange, der längsverstellbaren Kugelpfanne dargestellt. Auf die Darstellung des Rings 3 und der Gewindestange 1 ist hierbei verzichtet worden. In dieser Figur ist deutlich die Schlitzung der Hülse 2 zu erkennen.

Der Ring 3 kann eine zylindrische oder eine griffgünstigere Form aufweisen. An griffgünstigeren Formen bieten sich insbesondere Formen die einem Kegelstumpf oder einem trompetenartigen Rotationskörper entsprechen an. Ferner kann der Ring 3 auch Griffmulden, Riffelungen oder Rillungen zur Erhöhung der Griffigkeit aufweisen.

In Fig. 4 ist eine Stirnansicht und in Fig. 5 ein Längsschnitt durch den Ring 3 dargestellt. Der Ring 3 weist innen einen Rücken 6 auf, der eine glatte, gerippte oder gewindeartig ausgebildete Oberfläche 7 besitzt. Hierdurch wird eine optimale Verbindung zwischen dem Ring 3 und der Gewindestange 1 erzielt. An einem Ende ist der Rücken 6 erhöht und als eine Nase 8 ausgebildet. Mittels der Nase 8 wird bewirkt, daß die Gewindestange 1 nur bis zur jeweiligen Position des Rings 3 (mit der Nase 8) in die geschlitzte Hülse 2 eingeführt werden kann. Hierdurch wird insbesondere bei einer Vormontierung eine gleichmäßige Tiefe erzielt. Zudem bewirkt die Nase 8, daß die Gewindestange 1 sich nicht selbsttätig weiter in die geschlitzte Gewindehülse 2 hineinschrauben kann.

Fig. 6 zeigt ein Verbindungselement in einer anderen Ausführungsform. Die geschlitzte Hülse 2' ist so ausgebildet, daß sich der Schlitz entweder über ihre Gesamtlänge erstreckt oder von beiden Stirnseiten in erforderlicher Tiefe sich erstreckt. Hiermit können entweder zwei Gewindestangen miteinander verbunden werden oder das Verbindungselement auf eine durchgehende Gewindestange aufgebracht werden. Bei durchgehender Schlitzung benötigt eine entsprechende geschlitzte Hülse 2' mindestens einen Ring 3, bei einem nicht durchgehenden Schlitz wird für jede Seite der geschlitzten Hülse 2 ein entsprechender Ring 3 benötigt. An der Hülse 2' ist, vorzugsweise in ihrem mittleren Bereich ein Anschlußstück 9 vorgesehen. In Fig. 6 ist dieses Anschlußstück 9 ein Zapfen. Es liegt auf der Hand, daß anstelle dieses Zapfens auch ein Ring, ein klipartiges Befestigungselement, ein Haken, ein Gewindebolzen eine Kugelpfanne oder dergleichen vorgesehen sein kann. Es ist auch möglich, daß die Hülse 2' selbst Bestandteil eines benachbarten Bauteils ist.

PATENT- UND RECHTSANWÄLTE     0161622

BARDEHLE, PAGENBERG, DOST, ALTENBURG & PARTNER

RECHTSANWALTE
JOCHEN PAGENBERG DR JUR . LL M HARVARD··
BERNHARD FROHWITTER DIPL -ING ·
GÜNTER FRHR. v. GRAVENREUTH DIPL -ING (FH)·

PATENTANWALTE – EUROPEAN PATENT ATTORNEYS
HEINZ BARDEHLE DIPL -ING
WOLFGANG A. DOST DR . DIPL -CHEM
UDO W. ALTENBURG DIPL -PHYS

POSTFACH 86 06 20, 8000 MÜNCHEN 86
TELEFON (089) 98 03 61
TELEX 522791 pad d
CABLE: PADBÜRO MÜNCHEN
BÜRO: GALILEIPLATZ 1, 8 MÜNCHEN 80

DATUM 6. 5. 1985/st

S 5503-EP

-1-

P a t e n t a n s p r ü c h e

1. Verbindungselement, d a d u r c h   g e k e n n z e i c h - net, daß außenseitig einer geschlitzten Gewindehülse (2') mindestens ein verschiebbarer Ring (3) angeordnet ist.

2. Verbindungselement, nach Anspruch 1, dadurch gekennzeichnet, daß der Ring (3) auf seiner Innenseite einen Rücken (6) besitzt, der schmäler als die Schlitzung der geschlitzten Gewindehülse (2) und in etwa so hoch ist, daß der Abstand zwischen einer Oberfläche (7) des Rückens (6) und der gegenüberliegenden Innenseite des Rings (3) dem zugehörigen Durchmesser einer Gewindestange (1) entspricht.

3. Verbindungselement nach Anspruch 1 oder 2, dadurch gekennzeichnet, daß die Oberfläche (7) des Rückens (6) gerillt ist oder eine Gewindestruktur aufweist.

4. Verbindungselement nach einem oder mehreren der Ansprüche 1 bis 3, dadurch gekennzeichnet, daß an einem Ende des Rückens (6) eine Nase (8) angebracht ist, die in etwa bis in die Mitte der lichten Weite des Rings (8) reicht.

5. Verbindungselement nach einem oder mehreren der Ansprüche 1 bis 4, dadurch gekennzeichnet, daß eine Stirnseite ein Befestigungselement, vorzugsweise eine Kugelpfanne, ein Ring, einen Haken, eine Kugel, oder ein Gewinde aufweist.

6. Verbindungselement nach einem oder mehreren der Ansprüche 1 bis 4, dadurch gekennzeichnet, daß vorzugsweise im mittleren Bereich der geschlitzten Hülse (2, 2') ein Anschlußelement (9) vorgesehen ist.

7. Verbindungselement nach Anspruch 6, dadurch gekennzeichnet, daß das Anschlußelement ein Gewindebolzen, ein Ring, ein Haken, eine Kugelpfanne, eine Kugel oder ein Zapfen ist.

8. Verbindungselement nach Anspruch 6 oder 7, dadurch gekennzeichnet, daß die Hülse (2') in ihrer gesamten Länge geschlitzt ist und beidseitig des Anschlußelements (9) je einen Ring (3) aufweist.

9. Verbindungselement nach Anspruch 6 oder 7, dadurch gekennzeichnet, daß die Hülse (2') ausgehend von ihren beiden Stirnseiten jeweils nur über eine gewisse Länge geschlitzt ist und beidseitig des Anschlußelements (9) jeweils einen Ring (3) aufweist.

10. Verbindungselement nach einem oder mehreren der Ansprüche 1 bis 9, dadurch gekennzeichnet, daß der Schlitz der Hülse (2, 2') an seiner Öffnung mindestens auf einer Seite eine Fase aufweist.

11. Verbindungselement nach Anspruch 10, dadurch gekennzeichnet, daß der Rücken (6) des Rings (3) einen trapezförmigen Querschnitt aufweist.

12. Verbindungselement nach einem oder mehreren der Ansprüche 1 bis 11, dadurch gekennzeichnet, daß der Ring (3) die Form eines Kegelstumpfs oder eines trompetenförmigen Rotationskörpers aufweist und/oder Griffmulden, Rillen oder Riffelungen besitzt.

0161622

FIG. 1

FIG. 2

FIG. 3

FIG. 4

FIG. 5

FIG. 6